Europäisches Patentamt

European Patent Office

Office européen des brevets

(19)

(11) Publication number: **0 037 627**
**A2**

# EUROPEAN PATENT APPLICATION

(21) Application number: **81300632.7**

(22) Date of filing: **17.02.81**

(51) Int. Cl.³: **F 16 H 1/42**
**B 60 K 17/16**

(30) Priority: **19.02.80 GB 8005484**
**14.05.80 GB 8015945**

(43) Date of publication of application:
**14.10.81 Bulletin 81/41**

(84) Designated Contracting States:
**AT BE CH DE FR GB IT LI LU NL SE**

(71) Applicant: **Ready Pen Limited**
**8, Brook Street**
**Derby(GB)**

(72) Inventor: **Philpott, Arthur**
**"Ferndale" Whittaker Lane**
**Little Eaton Derbyshire(GB)**

(74) Representative: **Dealtry, Brian et al,**
**Eric Potter & Clarkson 14, Oxford Street**
**Nottingham NG1 5BP(GB)**

(54) Transmission assembly.

(57) A transmission assembly (10) for transmitting drive between a drive shaft (12) and a driven shaft (14), the transmission assembly including a first differential unit (18) having an input for connection to the drive shaft and two outputs (30,32), and a second differential unit (20) having two inputs and an output for connection to the driven shaft, a first output (30) of the first unit being drivingly connected to the first input of the second unit (20) and a second output (32) of the first unit being drivingly connected to the second input of the second unit, restraining means (54) for permitting the first output (30) and first input to rotate only in one direction, and control means (100) for controlling the speed of rotation of the second output (32) and second input so as to control the speed of rotation of the output (14) of the second unit (20) relative to the speed of rotation of the input (12) of the first unit (18).

./...

Croydon Printing Company Ltd.

_FIG. 1_

1

"TRANSMISSION ASSEMBLY"

The present invention relates to a transmission assembly for transmitting drive between a drive shaft and a driven shaft. In particular the present invention relates to a transmission assembly suitable for incorporation in a vehicle for transmitting drive from its engine to its road wheels.

According to the present invention there is provided a transmission assembly for transmitting drive between a drive shaft and a driven shaft, the transmission assembly including a first differential unit having an input for connection to the drive shaft and two outputs, and a second differential unit having two inputs and an output for connection to the driven shaft, a first output of the first unit being drivingly connected to a first input of the second unit and a second output of the first unit being drivingly connected to a second input of the second unit, restraining means for permitting the first output and first input to rotate only in one direction, and control means for controlling the speed of rotation of the second output and second input so as to control the speed of rotation of the output of the second unit relative to the speed of rotation of the input of the first unit.

Reference is now made to the accompanying drawings, in which:-

Figure 1 is a side longitudinal section through a transmission assembly according to the present invention;

Figure 2 is a plan view, partially in section of the transmission assembly shown in Figure 1;

Figure 3 is a part cross-sectional view taken through the housing;

Figure 4 is an end view of part of the control assembly for the transmission assembly;

2

Figure 5 is a plan view of another part of the control assembly;

Figure 6 is an end view of a further part of the control assembly;

Figure 7 is a side view of the part of the control assembly shown in Figure 6;

Figures 8a, 8b and 8c are respective side views of part of the control assembly shown in different operating positions; and

Figure 9 is a longitudinal section through another transmission assembly according to the present invention.

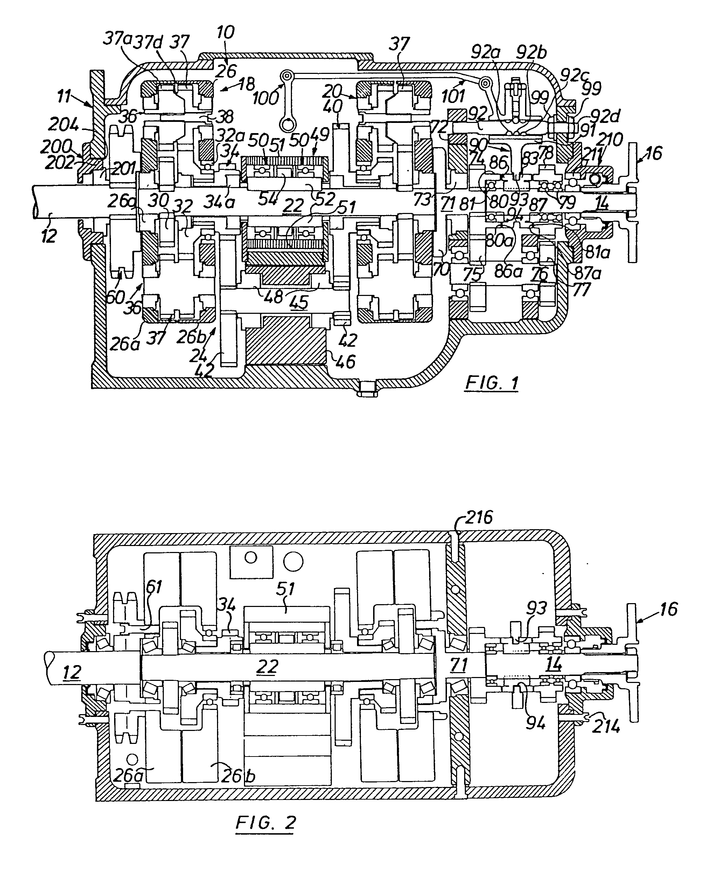

Referring initially to Figures 1 and 2, the transmission assembly 10 includes a housing 11 which rotatably supports an input shaft 12 and output shaft 14. For the purpose of explanation, it is assumed that the transmission assembly is to be used in a road vehicle for transmitting drive between its engine and wheels. Consequently output shaft 14 is provided with a flanged sleeve 16 which in use is bolted to a propeller shaft (not shown) for transmitting drive to the wheels.

The transmission assembly includes two differential units 18, 20 respectively which are drivingly connected to one another via a shaft 22 and gear train 24. Differential unit 18 includes a casing 26 which is formed by two casing halves 26a, 26b which are axially separable and which are bolted together by bolts (not shown).

The unit 18 includes a first sun gear 30 which is keyed to shaft 22 and a second sun gear 32 which is rotatably mounted in casing 26 by a bearing unit 32a so as to be rotatable relative to shaft 22. Sun gear 32 is connected to an output gear 34 so that gears 32 and 34 rotate in unison. The output gear 34 is mounted on shaft 22 via a bearing unit 34a. Thus, casing 26 is rotatably mounted in shaft 22 via bearings units 32a and 34a and also by bearing unit 26a.

3

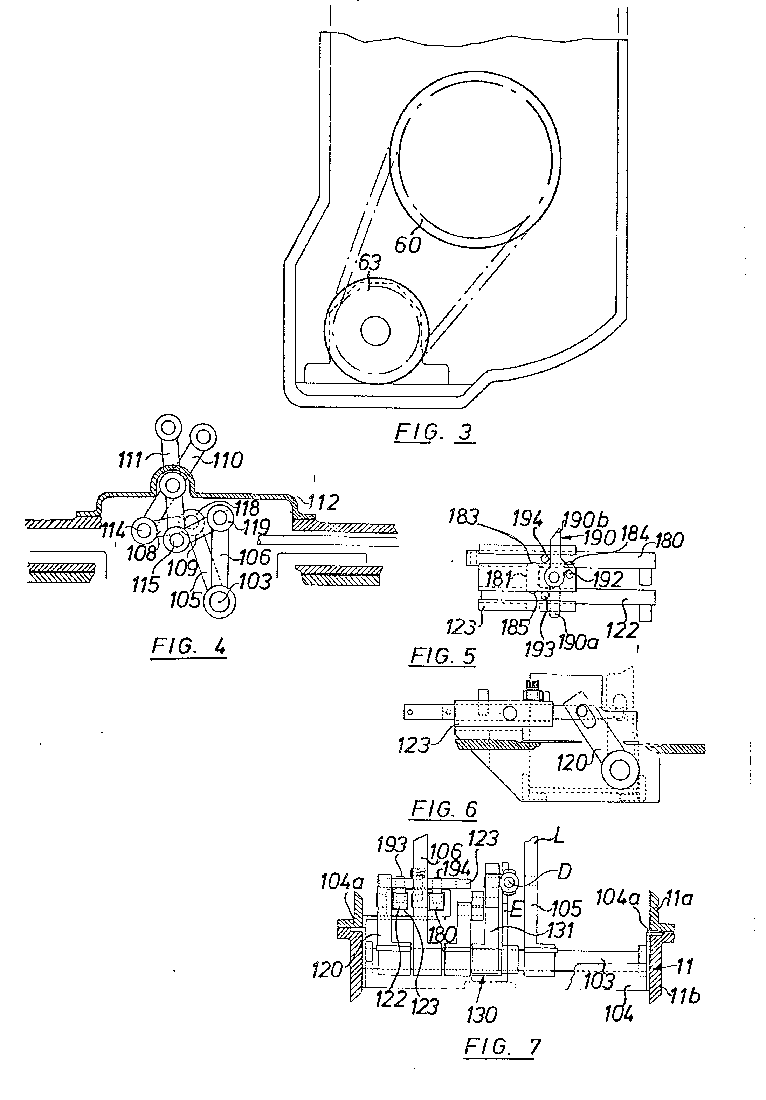

The first and second sun gears 30 and 32 are drivingly interconnected by two similar planetary gear trains 36 (see Figure 3). Each gear train 36 includes a gear cluster 37 which meshes with the sun gear 32 and a pinion gear 38 which meshes with the first sun gear 30 and with the gear cluster 37. The gear cluster 37a of one gear train 36 is formed by two halves 37b, 37c which are bolted together by means of a bolt 38. During assembly, gear cluster 37a serves as a timing gear in that gear halves 37b, 37c may be rotated relative to one another so as to ensure that gears 30, 32 and gear trains 36 mesh correctly. As shown the gear halves 37b and 37c are provided with co-operating conical abutment surfaces 37d and a welding compound such as sal ammoniac and iron oxide is placed between the conical abutment surfaces so that after tightening of bolt 38 the two gear halves 37b and 37c are fused together by corrosion welding.

The differential unit 20 is similar to gear unit 18 and similar parts have been designated with the same reference numerals. In gear unit 20, the second sun gear 32 is keyed onto shaft 22 and the first sun gear 30 is rotatably mounted in casing 26 of unit 20 so as to be rotatable relative to shaft 22. An input gear 40 is rotatably mounted on shaft 22 via bearing unit 40a and is connected to the first sun gear 30 of unit 20 so as to be rotatable therewith. Output gear 34 meshes with a first gear 42 of gear train 24 and input gear 40 meshes with a second gear 44 of gear train 24. Gears 42 and 44 are fixed onto opposite ends of a shaft 45 which is rotatably mounted in a support block 46 by means of a pair of bearing units 48. As shown in Figure 1, by virtue of the relative sizes of gears 34, 42, 44 and 40 there is a step down in rotational speed between the second sun gear 32 of unit 18 and the first

4

sun gear 30 of unit 20.

Positioned between gear units 18 and 20 is a bearing housing 49 which contains a pair of bearings 50 which are located between the casing 51 of the housing and a sleeve 52 which is keyed onto shaft 22. The sleeve 52 and bearings 50 serve to support and restrain distortion of shaft 22 when under heavy loadings. Located in between bearing units 50 is a one-way clutch 54, preferably of the wedge type, which permits shaft 22 to rotate only in the same direction as input shaft 12. Gear 42 is arranged to drive a suitable conventional hydraulic pump (not shown) whose fluid output is controlled by a variable valve (not shown) which in turn is controlled by a control assembly 100 which will be described in greater detail later.

The input shaft 12 carries a sprocket wheel 60 which is splined to shaft 12 and which is bolted to casing 26a by bolts 61 (see Figure 2). Thus the input shaft 12 rotates in unison with the casing 26 of unit 18.

The sprocket wheel 60 drives a smaller sprocket wheel 63 (Figure 3) which is arranged to drive the hydraulic pump via a clutch (not shown), such as a synchromesh type dog clutch. The clutch is engaged or disengaged by operation of the control assembly 100. Thus when the clutch is engaged, the hydraulic pump is in driving connection with both the input shaft 12 and gear 42 and when the clutch is disengaged the hydraulic pump is in driving connection with gear 42 only.

Casing 26 of unit 20 is bolted to an annular flange 70 of a stub shaft 71 which is rotatably mounted in a support plate 72 by means of a bearing unit 73. A gear 74 is fixed on shaft 71 and meshes with a gear 75 fixed on a shaft 76. A gear 78 is rotatably mounted on output shaft 14 by means of bearing units 79 and is in

5

mesh with a pinion gear (not shown) which in turn meshes with a gear 77 which is also fixed on shaft 71.

Gear 74 is provided with an annular projection 80 which houses a bearing unit 81 for rotatably supporting the inner most end of shaft 14. Gear 78 also includes an annular projection 82 which projects toward annular projection 80. Positioned between annular projections 80, 82 is a transmission member 83 which is secured to shaft 14 so as to be rotatable therewith but axially movable relative thereto.

The transmission member 83 includes two oppositely directed annular projections 86, 87 which have end faces 86a, 87a which are capable of engaging respective end faces 80a and 81a of annular projections 80, 82. When respective end faces are in engagement, the transmission member transmits rotational movement from either gear 74 or 78 to shaft 14 to be driven in 'forward' or 'reverse' directions. In the position shown in Figure 1, neither end face of transmission member 83 is in engagement with either end face 80a or 82a and accordingly shaft 14 is drivingly isolated from shaft 71 and constitutes a 'neutral' position.

Axial movement of transmission member 83 is achieved via a bracket 90 which depends from a sleeve 91 slidably mounted on a shaft 92. The bracket 90 includes a projection 93 which engages within an annular groove 94 formed in the transmission member 83.

Shaft 92 is provided with three annular grooves 92a, b and c and sleeve 91 includes a boss 95 which contains a ball 96 which locates within one of the grooves 92a, b or c. The ball 96 is biased by means of a spring 97 which is maintained under compression by a plunger 98 screw threadedly received in boss 95. Accordingly, three axial positions of sleeve 91 relative to shaft 92 (and accordingly the position of transmission member 83

6

relative to annular projections 80 and 82) may be accurately and positively achieved by engagement of ball 96 in groove 92a, b and c. Sleeve 91 is connected via linkage 101 to the control assembly 100.

The shaft 92 is slidably supported at one end in plate 72 and is secured at its other end to the housing 11 by nuts 99 threadedly received on a screw threaded portion 92d of shaft 92. Accordingly it is possible by adjusting the axial position of nuts 99 to accurately axially position shaft 92 relative to the housing 11.

The control assembly 100 is generally illustrated in Figures 4 to 8c and includes a control shaft 103 which is rotatably supported in a cradle 104. A first control arm 105 is keyed to shaft 103 so that deflection of arm 105 causes rotation of shaft 103. A second control arm 106 is rotatably mounted on shaft 103. As seen in Figure 4 control arms 105, 106 are connected via respective linkages 108, 109 to control levers 110, 111 which are pivotally mounted in a cover 112 which is releasably secured to the top of the housing 11. Preferably, seals such as felt oil rings are provided where the control levers pass through cover 112. Linkages 108, 109 are attached to levers 110 and 111 via pivotal connections 114, 115 and are attached to control arms 105, 106 via pivotal connections 118, 119. Pivotal connections 118, 119 are preferably constructed so that linkages 108, 109 may be separated from control arms 105, 106 by lateral displacement.

The upper ends of control levers 110 and 111 are connected via linkages to suitable control handles (not shown).

As mentioned above, control arm 105 causes rotation of shaft 102 and rotation of shaft 103 is used to control movement of transmission member 83 as well as to control opening of the valve which controls fluid output from the hydraulic pump.

Control of the valve is achieved via an arm 120 which is keyed to shaft 103 and is therefore deflected when shaft 103 rotates.  The arm 120 is pivotally connected to a slide 122 which is slidably received in a block 123 which is mounted on the cradle 104.  The slide 123 is connected via a linkage (not shown) to the valve.  Accordingly, deflection of arm 105 in an anticlockwise direction as viewed in Figure 6 causes slide 123 to move progressively to the left and cause the valve to close until a maximum displacement of arm 105 is reached.

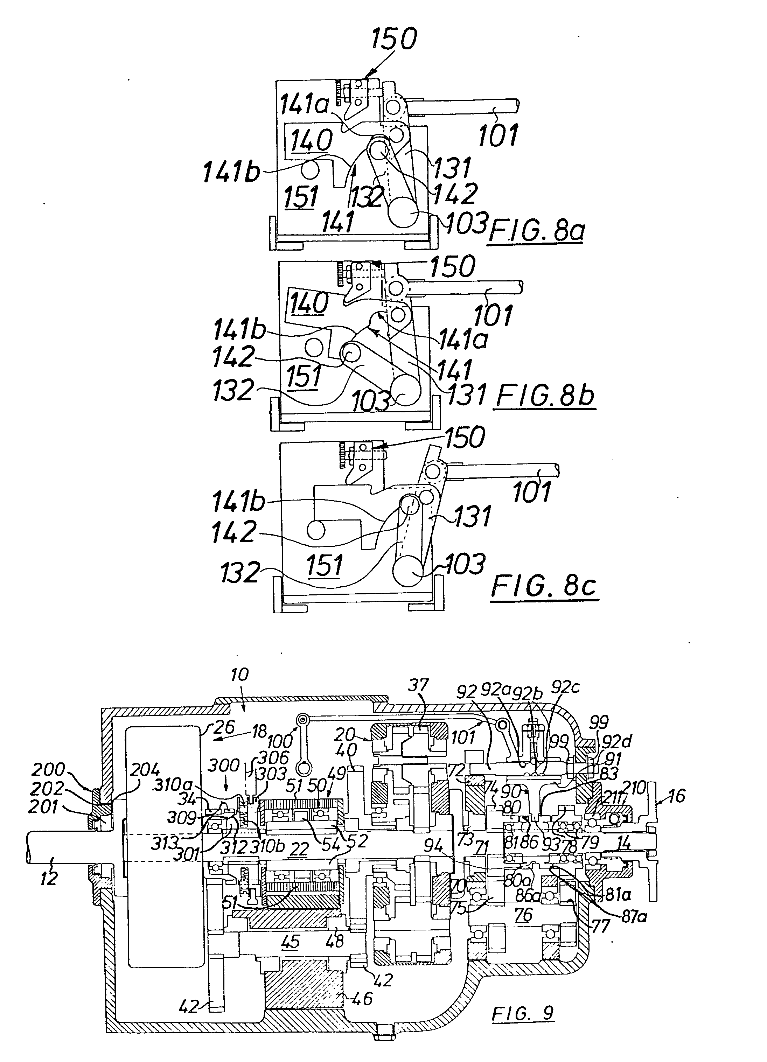

Movement of transmission member 83 is controlled by control unit 130 which includes an arm 131 rotatably mounted on shaft 103 and an arm 132 which is keyed to shaft 103.  Arm 131 is pivotally connected to linkage 101 so that deflection of arm 131 in a clockwise direction (as viewed in Figures 8a - 8c) causes transmission member to engage gear 78 and thereby engage 'reverse' and deflection in an anticlockwise direction causes transmission member to engage gear 74 and thereby engage 'forward'.

Deflection of arm 131 is effected by deflection of arm 132 which acts upon arm 131 via a cam plate 140 which is pivotally attached to arm 131.

Cam plate 140 includes a shaped recess 141 which co-operates with a peg 142 projecting from arm 132.  When the transmission member 83 is in its neutral position, arm 131 is spaced from a stop 150 mounted on a support plate 151 and peg 142 resides in a first portion 141a of recess 141.  On deflection of arm 132 in an anticlockwise direction peg 142 co-operates with the first portion 141a to deflect arm 131 in an anticlockwise direction also.  When arm 131 abuts stop 150 continued deflection of arm 132 causes peg 142 to ride out of

8

recess portion 141a and thereby causes plate 140 to be deflected upwardly and the cam plate 140 is maintained in a raised positon whilst peg 142 rides along the second recess portion 141b. A recess 144 is formed in plate 140 which co-operates with a projection 145 formed on stop 150 and serves to restrain arm 131 from deflecting in a clockwise direction whilst peg 142 rides over second recess portion 141b.

The control assembly is arranged so that when arm 131 abuts stop 150 the transmission member 83 engages gear 74 and that slide 123 only begins to close the valve after peg 142 has moved out of recess portion 141a.

When the arm 132 is deflected in a clockwise direction from a position whereat transmission member 83 is in its neutral position peg 142 co-operates with recess portion 141a to deflect arm 131 in a clockwise direction and so causes transmission member 83 to engage gear 78. Simultaneously, slide 123 is moved (to the right in Figure 6) to partially close the valve by a predetermined amount. Consequently, deflection of control lever 110 in one direction from the position shown in Figure 4 initially causes transmission member 83 to engage gear 74 and thereby cause output shaft 14 to rotate in the 'forward' direction and further deflection in that direction causes variable operation of the valve controlling the hydraulic pump depending on the degree of deflection.

If the control lever 110 is deflected in the opposite direction from the position shown in Figure 4 then the transmission member 83 is moved to engage gear 78 and thereby cause shaft 14 to rotate in the 'reverse' direction. In the illustrated embodiment deflection in the opposite direction is limited so that on engagement of the transmission member 83 and gear 78 the valve is closed by a predetermined amount so as to give a fixed geared ratio between the input and output shafts 12 and 14 respectively.

It will be appreciated therefore that in use, the speed of the output shaft 14 and its direction of rotation relative to the input shaft 12 is controlled solely by operation of control lever 110.

The gear sizes within the units 18, 20 are chosen so that when the first sun gear 30 of the first unit 18 is stationary, output gear 34 is rotated at a slower rotational speed than input shaft 12 and that when the second sun gear 32 of the second unit 20 is stationary the rotational speed of the shaft 71 is slower than that of the first sun gear 30 of the second unit 20. The relative sizes of gears 34, 42, 44 and 40 are also chosen so that there is a step down in rotational speed between the second sun gear 32 of the first unit 18 and the first sun gear 30 of the second unit 20. Accordingly, when shaft 22 is stationary and the pump valve is fully open there is a step down in rotational speed between the input shaft 12 and output shaft 14; the amount of step down being determined by the chosen gear sizes. In a preferred embodiment the gear sizes are chosen so that there is a reduction of 10.5 to 1 between the input and output shafts.

As the pump valve is closed, rotation of sun gears 32 and 30 of the first and second units respectively is progressively restrained thereby causing shaft 22 to rotate in the same direction as the input shaft. Due to the relative gear sizes within each unit, as the speed of rotation of shaft 22 progressively increases and that the sun gears 32 and 30 decreases, the speed of shaft 71 is progressively increased. When the pump valve is fully closed, sun gears 32, 30 of the first and second units are stationary and drive between units

10

18 and 20 is transmitted by shaft 22 alone. In this condition, there is a step up in rotational speed between the input shaft 12 and output shaft 14 due to the relative sizes of gears within units 18 and 20. In the illustrated embodiment the relative gear sizes are chosen so that there is a step-up ratio between the input shaft and output shaft of 1:2.

Thus, in the 'forward' direction, by suitable operation of control lever 110 it is possible to vary the rotational speed of the output shaft 14 relative to the input shaft 12 in an infinitely variable manner between a reduction of 10.5 to 1 to a step-up of 1 to 2.

It will be appreciated that in the event of failure within the hydraulic circuitry then drive will be transmitted between the input shaft and output shaft at the lowest ratio.

As mentioned above, the control assembly 100 includes a control lever 111 which effects deflection of control arm 106. The purpose of control lever 111 is to actuate the clutch which is located between sprocket wheel 63 and the hydraulic pump. Accordingly, control arm 106 is pivotally connected to a slide 180 which is slidingly received in the block 123 and which is connected to a linkage (not shown) which is connected to the clutch.

When control lever 111 is deflected to move slide 180 to the right (as viewed in Figure 6) the clutch is actuated so as to engage drive between sprocket wheel 63 and the pump. Accordingly, the input shaft 12 is then directly drivingly connected to the pump and the pump can then be used to act as a hydraulic brake. If the control lever 110 is now operated to progressively close the valve on the pump then the pump will produce a progressive braking effect on the input shaft 12 and consequently on the output shaft 14. Thus, if a

11

vehicle is on overrun it is possible to brake the vehicle by using the control lever 110 without using the conventional brakes on the vehicle.

It will be appreciated that it is important that operation of the brake control lever 111 should only be permitted when control lever 110 is in a position whereat the pump valve is fully open, preferably whilst the transmission member 83 is still engaged with gear 74.

Accordingly, as seen in Figure 5 slides 122 and 180 co-operate with one another via a piston 181 slidably received in a bore 182 formed in block 123 so that slide 122 may only be moved when piston 181 is located in either one of two recesses 183, 184 formed in slide 180 and conversely, slide 180 may only be moved when piston 181 is located in recess 185 formed in slide 122. Recess 183 is located at a position whereat the clutch is disengaged and recess 184 is located at a position whereat the clutch is engaged.

A movable stop 190 having a pair of arms 190a, 190b extending in opposite directions is provided which is pivotally mounted on the block 123 and is prevented from rotating in a clockwise direction (Figure 5) by a peg 192. Each slide 122, 180 is provided with an upwardly projecting peg 193, 194 respectively which co-operate with arms 190a, 190b respectively. The stop 190 accordingly serves to ensure that slides 122 and 180 are positioned so that recesses 183 and 185 are located directly opposite one another and thereby enable either one of the slides to be moved.

It will be appreciated that if desired, the pump may be drivingly connected to the output from the second differential unit via a clutch instead of being drivingly connected to the input shaft 12. Thus the braking effect of the pump would be applied directly to the output of the transmission assembly.

12

It is also envisaged that a separate hydraulic pump could be utilised which would be located externally of the housing 11. The separate hydraulic pump could be positioned between the propeller shaft and the flanged sleeve 16 and arranged to transmit drive therebetween. Thus under free running conditions the separate hydraulic pump would be allowed to operate without any restriction. If braking is desired, the output from the pump could be progressively restricted in order to provide a progressive braking effect. Such an arrangement could be located between a conventional gear box and propeller shaft.

As seen in Figure 7, the cradle 104 has a pair of opposed flanges 104a which are trapped between opposed abutting faces of an upper cover portion 11a and lower portion 11b of the housing 11. Thus when the upper cover portion 11a is removed, and linkages connected to slides 122, 180 and arm 131 are disconnected the cradle 104 may be removed from the housing lower portion 11b with the remainder of the control assembly 100.

As seen from Figures 1 and 2, the transmission assembly is constructed so that it may be easily assembled and disassembled. In this respect, a bearing housing 200 which contains a bearing unit 201 which supports the input shaft 12 is bolted to the housing 11 and includes an annular projection 202 which is received in an opening 204 formed in the housing 11. The size of the opening 204 is chosen so as to enable access to the bolt heads of bolts 61 so that it is possible by removing housing 200 to remove bolts 61 and thereby separate sprocket wheel 60 and casing 26 of the first unit 18.

A similar bearing housing 210 containing bearing unit 211 is provided for supporting the output shaft 14. By removing bolts 214 the bearing housing 210 and shaft 14 may be axially separated from the annular projection 80 of gear 74.

By removing bolts (not shown) securing housing 49 to the support block 46 and bolts (not shown) which maintain support plate 72 in position it is possible to remove, as one unit, both differential units 18, 20 and connecting shaft 22.

It is to be understood that the hydraulic pump would be arranged to pump lubricating fluid contained in housing 11 and would be provided with the necessary filters and valves. Additionally, if required, an oil cooler may be provided for cooling the fluid being pumped.

Reference is now made to Figure 9 which shows a modification of the transmission assembly described with reference to Figures 1 to 8. Accordingly parts in Figure 9 similar to those in Figures 1 to 8 have been designated by the reference numerals.

In the transmission assembly shown in Figure 9, sprocket wheels 60, 63 and associated clutch are dispensed with. Instead, a synchromesh gear assembly 300 is provided which is operable to drivingly connect output gear 34 to shaft 22. Thus, when the assembly 300 is operated, shaft 22 is drivingly connected to the hydraulic pump. Accordingly, progressive closure of the outlet of the hydraulic pump creates an increased braking effect on shaft 22 and in turn on output shaft 14.

The gear assembly 300 includes a gear member 301 which is keyed onto shaft 22 and is axially slidable relative thereto. An internally toothed gear member 303 meshes with gear member 301 and is axially slidably received on the gear member 301. Axial movement of the gear member 303 is achieved via arm 306 which is rotatably received on gear member 303. The arm 306 is connected to control arm 106 and control lever 111 of

14

the control assembly.

A gear formation 309 which is integrally formed with the output gear 34 is positioned adjacent to gear member 301 and is capable of meshing with gear member 303.

The gear assembly 300 is shown in its inoperative position. In use, to operate the gear assembly 300, the gear member 303 is moved axially toward the gear formation 309 by operation of control lever 111. As shown, gear members 301 and 303 are connected so as to move axially in unison by virtue of ball and socket formations 310. Gear member 301 has a conical formation 312 which co-operates with a conical recess 313 formed in gear formation 309 so that as gear members 301 and 303 approach gear formation 309 they are induced to rotate and achieve the same rotational speed as gear formation 309. On engagement of the conical formation 312 and recess 313 further movement of the gear member 303 causes the balls 310a to move radially inwards against the bias of springs 310b to enable the gear member 303 to mesh with gear formation 309 to form a driving connection between gear member 301 and gear formation 309.

Operation of the transmission assembly shown in Figure 9 is exactly the same as that described with reference to Figures 1 to 8.

15

## CLAIMS

1. A transmission assembly for transmitting drive between a drive shaft and a driven shaft, the transmission assembly including a first differential unit having an input for connection to the drive shaft and two outputs, and a second differential unit having two inputs and an output for connection to the driven shaft, a first output of the first unit being drivingly connected to a first input of the second unit and a second output of the first unit being drivingly connected to a second input of the second unit, restraining means for permitting the first output and first input to rotate only in one direction, and control means for controlling the speed of rotation of the second output and second input so as to control the speed of rotation of the output of the second unit relative to the speed of rotation of the input of the first unit.

2. A transmission assembly according to claim 1 wherein the input to the first unit is selectively drivingly connectable to the control means so that when connected, the control means serve to restrain the speed of rotation of the input to the first unit.

3. A transmission assembly according to claim 1 wherein the output from the second unit is selectively drivingly connectable to the control means so that when connected, the control means serve to restrain the speed of rotation of the output from the second unit.

4. A transmission assembly according to claim 1, 2 or 3 wherein the control means includes a hydraulic pump which is arranged to be driven by said second output, the fluid output from the pump being controlled by valve means operated by a control assembly.

5. A transmission assembly according to claim 4 when dependent on claim 2 wherein the input to the first unit is drivingly connected to the hydraulic pump via a clutch.

6. A transmission assembly according to claim 4 when dependent on claim 3 wherein the output of the second unit

16

is drivingly connected to the hydraulic pump via a clutch.

7. A transmission assembly according to claim 5 or 6 wherein the clutch is operated by said control assembly.

8. A transmission assembly according to any preceding claim wherein the output of said second unit is drivingly connected to the driven shaft via a transmission member which in one position causes the driven shaft to rotate in the same direction as the output of said second unit and which in another position causes the driven shaft to rotate in the opposite direction.

9. A transmission assembly according to claim 8 when dependent on claim 4,5,6 or 7 wherein movement of the transmission member is controlled by said control assembly.

10. A transmission assembly according to claim 9 wherein the control assembly includes a rotatable control shaft, the control shaft being connected via a control unit to said transmission member and being drivingly connected to the valve means so that rotation of the control shaft in one direction initially causes the transmission member to move to drivingly connect the output of the second unit to the driven shaft and further rotation of the shaft causes operation of the valve means.

11. A transmission assembly according to claim 10 wherein the control unit includes an arm rotatably mounted on the control shaft and which is connected to the transmission member via a linkage, the arm pivotally carrying a cam plate, a further arm secured to the control shaft for rotation therewith, the further arm carrying a cam which co-operates with the cam plate to initially move said arm to engage a stop when the control shaft is moved in said one direction, further movement of the control shaft causing the cam to deflect the cam plate whilst the arm is in abutment with the stop.

12. A vehicle including a transmission assembly including a first differential unit having an input for connection to the drive shaft and two outputs, and a second differential unit having two inputs and an output for connection to the driven shaft, a first output of the first unit being drivingly connected to a first input of the second unit and a second output of the first unit being drivingly connected to a second input of the second unit, restraining means for permitting the first output and first input to rotate only in one direction, and control means for controlling the speed of rotation of the second output and second input so as to control the speed of rotation of the output of the second unit relative to the speed of rotation of the input of the first unit.

13. A brake system for a wheeled vehicle, the system including a hydraulic pump which is arranged to be driven by at least one wheel of the vheicle and control means for controlling the output of the pump in order to restrain rotation of said wheel.

FIG. 1

FIG. 2

0037627

60

63

*FIG. 3*

111 110

114 112

108 118

115 119

109 106

105 103

*FIG. 4*

183 194 190b

190 184 180

181 192

123 185 122

193 190a

*FIG. 5*

123

120

*FIG. 6*

193 106 123 L

194

104a D

E 104a 11a

180 105

122 131

120 103 11

122 123 130 104 11b

*FIG. 7*

FIG. 8a

FIG. 8b

FIG. 8c

FIG. 9